# EUROPEAN PATENT SPECIFICATION

(11) **EP 3 908 002 B1**
(45) Date of publication and mention of the grant of the patent: **22.07.2026**
(21) Application number: 19907744.7
(22) Date of filing: 31.12.2019
(51) Int. Cl.: H04N 19/503, H04N 19/52, H04N 19/513

(54) **VIDEO PROCESSING METHOD AND APPARATUS**
VIDEOVERARBEITUNGSVERFAHREN UND -VORRICHTUNG
APPAREIL ET PROCÉDÉ DE TRAITEMENT VIDÉO

(30) Priority: 03.01.2019 WO PCT/CN2019/070306
(43) Date of publication of application: 10.11.2021
(73) Proprietor: SZ DJI Technology Co., Ltd., Shenzhen, Guangdong 518057 (CN)
(72) Inventor: ZHENG, Xiaozhen, Shenzhen Guangdong 518057 (CN); WANG, Suhong, Beijing 100871 (CN); MA, Siwei, Beijing 100871 (CN); WANG, Shanshe, Beijing 100871 (CN)
(74) Representative: Goddar, Heinz J.
(86) International application number: PCT/CN2019/130881
(87) International publication number: WO 2020/140916

(56) References cited:
- CN-A- 1 487 748
- CN-A- 104 365 101
- CN-A- 104 780 380
- CN-A- 104 811 729
- JP-A- H11 298 902
- US-A1- 2016 219 278
- XIU (INTERDIGITAL) X ET AL: "Description of SDR, HDR and 360° video coding technology proposal by InterDigital Communications and Dolby Laboratories", no. m42388, 3 April 2018 (2018-04-03), XP030261360, Retrieved from the Internet <URL:http://phenix.int-evry.fr/mpeg/doc_end_user/documents/122_San%20Diego/wg11/m42388-JVET-J0015-v1-JVET-J0015-v1.zip JVET-J0015-v1.0.docx> [retrieved on 20180403]
- CHIEN WEI-JUNG ET AL: "Sub-block motion derivation for merge mode in HEVC", PROCEEDINGS OF SPIE; [PROCEEDINGS OF SPIE ISSN 0277-786X VOLUME 10524], SPIE, US, vol. 9971, 27 September 2016 (2016-09-27), pages 99711K - 99711K, XP060078012, ISBN: 978-1-5106-1533-5, DOI: 10.1117/12.2239709
- YANG H ET AL: "Description of Core Experiment 4 (CE4): Inter prediction and motion vector coding", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J1024-v3, 28 May 2018 (2018-05-28), XP030151319
- WANG (PEKING UNIVERSITY) S H ET AL: "CE2-related: Further simplification of ATMVP collocated block derivation", no. m45803, 3 January 2019 (2019-01-03), XP030198266, Retrieved from the Internet <URL:http://phenix.int-evry.fr/mpeg/doc_end_user/documents/125_Marrakech/wg11/m45803-JVET-M0526-v1-JVET-M0526.zip JVET-M0526.docx> [retrieved on 20190103]

## Description

### TECHNICAL FIELD

The present disclosure relates to the field of video encoding/decoding technologies and, more particularly, to a video processing method and device.

### BACKGROUND

A video encoding process includes an inter-frame prediction process. The modes of inter-frame prediction include a merge mode and a non-merge mode. In the merge mode, it is usually needed to construct a motion vector candidate list of the merge mode first, and select the motion vector of the current block from the motion vector candidate list of the merge mode. The current block may also be referred to as a current coding unit (CU).

With the development of coding technology, an alternative/advanced temporal motion vector prediction (ATMVP) technology has been introduced into the inter-frame prediction method. In the ATMVP technology, the current block is divided into a plurality of sub-blocks, and the motion information of the plurality of sub-blocks is calculated. The ATMVP technology aims to introduce sub-block-level motion vector prediction to improve the overall video coding performance.

The process of using ATMVP technology to find the motion information of the plurality of sub-blocks of the current block is relatively complicated, and there are some redundant operations. There is still room for improvement of the process.

The Joint Video Experts Team (JVET) contribution JVET-J0015 by Xiu et al., "Description of SDR, HDR, and 360° video coding technology proposal by InterDigital Communications and Dolby Laboratories" to the 10th meeting of the JVET of ITU-T SG 16 WP 3 and ISO/IEC JTC 1/SC 29/WG 11, April 2018, is a response to the Joint Call for Proposals on Video Compression with Capability beyond HEVC was jointly developed by InterDigital Communications and Dolby Laboratories. The contribution provides a complete set of solutions for all three types of video formats essential to the video applications targeted by the new video coding standard. The core SDR codec in this response is based on the Joint Exploration Model (JEM) design and suggests simplifications to motion search for frame-rate up conversion (Section 2.1.4.1), decoder side motion vector refinement (Section 2.1.4.2), bidirectional optical flow (Section 2.1.7.1), overlapped block motion compensation (Section 2.1.7.2), local illumination compensation (Section 2.1.7.3), ATMVP and STMVP merge modes (Section 2.1.7.4) and adaptive loop filters (Section 2.1.9.1).

### SUMMARY

The present disclosure provides a video processing method and a video processing device, to simplify encoding operations. The invention is defined by the subject matter of the appended independent claims. Advantageous embodiments are subject to the dependent claims.

In the present disclosure, a number of the reference frame lists which are needed to be scanned in the bidirectional prediction may be limited to simplify encoding/decoding process.

### BRIEF DESCRIPTION OF THE DRAWINGS

FIG. 1 is flow chart of a method for constructing an affine merge candidate list.
FIG. 2 is a schematic diagram showing adjacent blocks of a current block.
FIG. 3 is a flow chart of an implementation of ATMVP.
FIG. 4 is a schematic diagram showing a method for obtaining the motion information of sub-blocks of the current block.
FIG. 5 is a schematic flow chart of a video processing method consistent with an embodiment of the present disclosure.
FIG. 6 is a schematic structural diagram of a video processing device consistent with an embodiment of the present disclosure.

### DETAILED DESCRIPTION OF THE EMBODIMENTS

The various embodiments of the present disclosure can be applied to a variety of video encoding standards, such as H.264, high-efficiency video coding (HEVC), versatile video coding (VVC), audio-video coding standard (audio-video coding standard, AVS), AVS+, AVS2, or AVS3, etc.

The video encoding process mainly includes prediction, transformation, quantization, entropy encoding, loop filtering, and other parts. Prediction is an important part of mainstream video coding technology. Prediction can be divided into intra-frame prediction and inter-frame prediction. Inter-frame prediction can be realized by motion compensation. An example of the motion compensation process will be described below.

For example, a frame of an image can be divided into one or more coding regions. each coding region of the one or more coding regions may also be called a coding tree unit (CTU). The size of the CTU may be, for example, 64×64 or 128×128 (where the unit is a pixel, omitted for similar descriptions below). Each CTU can be divided into square or rectangular image blocks. Each image block may also be called a coding unit (CU), and the current CU to be encoded will be referred to as the current block in the following.

When performing inter-frame prediction on the current block, a reference frame (which may be a reconstructed frame adjacent in the temporal domain) can be searched to find a similar block of the current block to be used as the predicted block of the current block. The relative displacement between the current block and the similar block is called a motion vector (MV). The process of finding the similar block in the reference frame as the predicted block of the current block is motion compensation.

The inter-frame prediction mode includes a merge mode and a non-merge mode. In the merge mode, the motion vector (MV) of the image block is the motion vector prediction (MVP) of the image block. Therefore, for the merge mode, only the index of the MVP and the index of the reference frame need to be transmitted in the bitstream. On the other hand, for the non-merge mode, not only the indices of the MVP and the reference frame need to be transmitted in the bitstream, but also the motion vector difference (MVD) needs to be transmitted in the bitstream.

The conventional motion vector uses a simple translation model, that is, the motion vector of the current block represents the relative displacement between the current block and the reference block. This type of motion vector is difficult to accurately describe more complex motion conditions in the video, such as zoom, rotation, perspective, and so on. To be able to describe more complex motion situations, an affine model is introduced in the relevant codec standards. The affine model uses the motion vectors of two or three control points (CPs) of the current block to describe the affine motion field of the current block. When two control points are used, the two control points can be, for example, the upper left corner point and the upper right corner point of the current block. When three control points are used, the three control points can be, for example, the upper left corner point, the upper right corner point, and the lower left corner point of the current block.

The combination of the affine model with the merge mode mentioned above forms the affine merge mode. The motion vector candidate list (the merge candidate list) of the ordinary merge mode records the MVP of the image block, and the motion vector candidate list of the affine merge mode (the affine merge candidate list) records the control point motion vector prediction (CPMVP). Similar to the normal merge mode, the affine merge mode does not need to add MVD to the bitstream, but directly uses CPMVP as the CPMV of the current block.

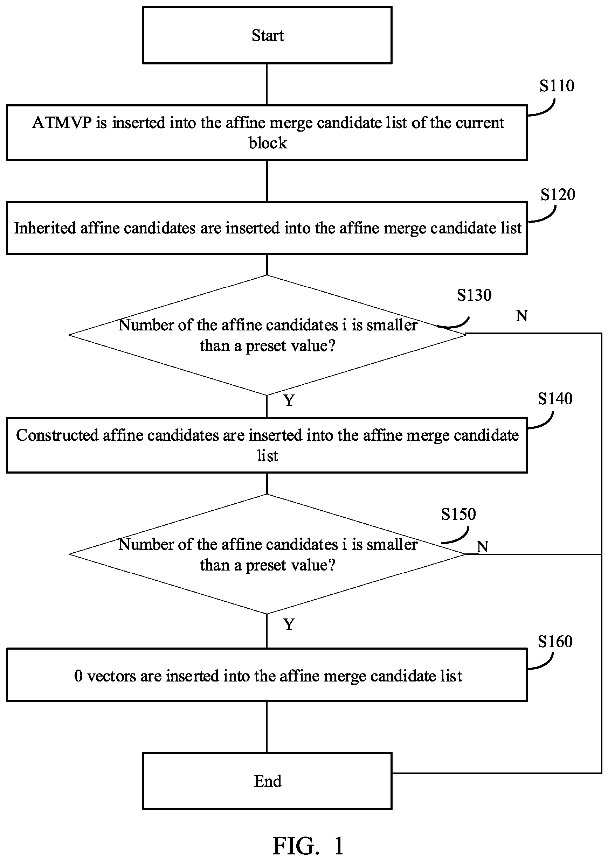

The construction of the affine merge candidate list of the current block is one of the important processes of the affine merge mode. FIG. 1 shows a possible method of constructing the affine merge candidate list.

In S110, ATMVP is inserted into the affine merge candidate list of the current block.

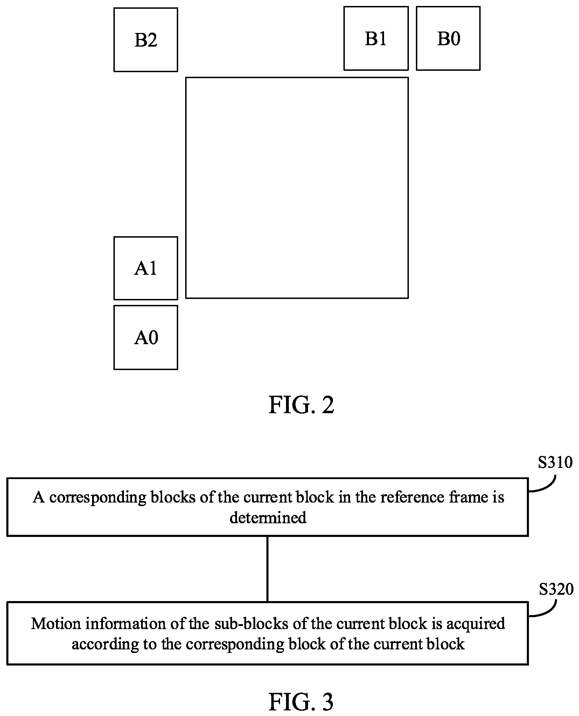

ATMVP contains the motion information of the sub-blocks of the current block. In other words, when the ATMVP technology is used, the motion information of the sub-blocks of the current block will be inserted into the affine merge candidate list, such that the affine merge mode can perform motion compensation at the sub-block level, thereby improving the overall coding performance of the video. The implementation of process S110 will be described in detail below in conjunction with FIG. 3 and will not be described in detail here.

The motion information includes one or any combination of the following information: a motion vector; motion vector difference value; a reference frame index value; a reference direction of inter-frame prediction; information of an image block using intra-frame coding or inter-frame coding; or a division mode of an image block.

In S120, inherited affine candidates are inserted into the affine merge candidate list.

For example, as shown in FIG. 2, the surrounding blocks of the current block may be scanned in the order of A1->B1->B0->A0->B2, and then the CPMV of the surrounding blocks in the affine merge mode may be inserted into the affine merge candidate list of the current block as the affine candidates of the current block.

In S130, whether a number of the affine candidates in the affine merge candidate list is smaller than a preset value is determined.

When the number of the affine candidates in the affine merge candidate list reaches the preset value, the process in FIG. 1 is ended. When the number of the affine candidates in the affine merge candidate list is smaller than the preset value, S140 is executed.

In S140, constructed affine candidates are inserted into the affine merge candidate list.

For example, the motion information of the surrounding blocks of the current block can be combined to construct new affiliate candidates, and the constructed affiliate candidates can be inserted into the affiliate merge candidate list.

In S150, whether the number of the affine candidates in the affine merge candidate list is smaller than the preset value is determined.

When the number of the affine candidates in the affine merge candidate list reaches the preset value, the process in FIG. 1 is ended. When the number of the affine candidates in the affine merge candidate list is smaller than the preset value, S160 is executed.

In S160, 0 vectors are inserted into the affine merge candidate list.

That is, the 0 vectors are used to pad the affine merge candidate list such that the number of the affine candidates in the affine merge candidate list reaches the preset value.

The implementation of S110 in FIG. 1 will be described in detail below with reference to FIG. 3. In some embodiments, the method of inserting ATMVP into the affine merge candidate list of the current block described below may not be limited to the embodiment shown in FIG. 1 above.

As shown in FIG. 3, the implementation of the ATVMP technology, that is, the acquisition of the motion information of the sub-blocks of the current block, can roughly include S310 and S320.

In S310, a corresponding block of the current block in the reference frame is determined.

In the current ATMVP technology, a frame used to obtain motion information of the current frame (the frame where the current block is located) is called a co-located picture. The co-located frame of the current frame may be set when a slice is initialized. Taking forward prediction as an example, the first reference frame list may be a forward reference frame list or a reference frame list containing the first group of reference frames. The first group of reference frames may include reference frames whose time sequence is before and after the current frame. When the slice is initialized, the first frame in the first reference frame list of the current block may be usually set as the co-located frame of the current frame.

The corresponding block of the current block in the reference frame may be determined by a temporal motion vector (temp MV). Therefore, to obtain the corresponding block of the current block in the reference frame, the temporal motion vector needs to be derived first. The following are examples of the forward prediction and bidirectional prediction to illustrate the derivation process of the temporal motion vector.

For the forward prediction, the number of reference frame lists (also referred to as reference lists or reference image lists) of the current block may be 1. The reference frame list of the current block may be referred to as the first reference frame list (reference list 0). In one scenario, the first reference frame list may be a forward reference frame list. The co-located frame of the current frame may be usually set as the first frame in the first reference frame list.

In the process of deriving temporal motion vectors, one way to achieve this may be scanning the motion vector candidate list of the current block (the motion vector candidate list can be constructed based on the motion vectors of the image blocks at 4 adjacent positions in the spatial domain), and then using the first candidate motion vector in the motion vector candidate list as the initial temporal motion vector. Then, the first reference frame list of the current block may be scanned. When the reference frame of the first candidate motion vector is the same as the co-located frame of the current frame, the first candidate motion vector can be used as the temporal motion vector. When the reference frame of a candidate motion vector is different from the co-located frame of the current frame, the temporal motion vector may be set to a 0 vector and the scan will stop.

In this implementation, one motion vector candidate list needs to be constructed to obtain the first candidate motion vector in the list. In another implementation, the motion vector of a certain spatial neighboring block of the current block can be directly taken as the initial temporal motion vector. When the reference frame of the motion vector of the spatial neighboring block is the same as the co-located frame of the current frame, the initial temporal motion vector can be used as the temporal motion vector. Otherwise, the temporal motion vector can be set to a 0 vector, and the scan will stop. Here, the spatial neighboring block may be any one of the coded blocks around the current block. For example, it may be fixed to be the left block of the current block, or fixed to be the upper block of the current block, or fixed to be the upper left block of the current block.

For the bidirectional prediction, the number of the reference frame lists of the current block may be 2, that is, the reference frame lists may include the first reference frame list (reference list 0) and the second reference frame list (reference list 1). In one scenario, the first reference frame list may be a forward reference frame list, and the second reference frame list may be a backward reference frame list.

In the process of deriving the temporal motion vector, one implementation may be scanning the current motion vector candidate list first, and using the first candidate motion vector in the motion vector candidate list as the initial temporal motion vector. Then, one reference frame list in the current reference direction of the current block (it can be the first reference frame list or the second reference frame list) may be scanned. When the reference frame of the first candidate motion vector is the same as the co-located frame of the current frame, the first candidate motion vector can be used as the temporal motion vector. When the reference frame of the first candidate motion vector is different from the co-located frame of the current frame, one reference frame list in another reference direction of the current block may be continuously scanned. Similarly, when the reference frame of the first candidate motion vector in the reference frame list in another reference direction is the same as the co-located frame of the current frame, the first candidate motion vector can be used as the temporal motion vector. When the reference frame of the first candidate motion vector is different from the co-located frame of the current frame, the temporal motion vector can be set to a 0 vector, and the scan will stop. It should be noted that in some other embodiments, both the first reference frame list and the second reference frame list may include reference frames that are before and after the current frame in time sequence. The bidirectional prediction may refer to that the reference frames with different reference directions are selected from the first reference frame list and the second reference frame list.

In this implementation, deriving the temporal MV from ATMVP in bidirectional prediction still needs to construct the motion vector candidate list. In another implementation, the motion vector of a certain spatial neighboring block of the current block can be directly taken as the initial temporal motion vector. According to the embodiments of the invention, for bidirectional prediction, one reference frame list of the first reference frame list and the second reference frame list in the current reference direction of the current block is scanned first. When the reference frame of the motion vector of the spatial neighboring block in the current reference direction is the same as the co-located frame of the current frame, the motion vector is used as the temporal motion vector. When the reference frame of the motion vector of the spatial neighboring block in the current reference direction is different from the co-located frame of the current frame, one reference frame list in another reference direction of the current block is scanned continuously. Similarly, when the reference frame of the motion vector of the spatial neighboring block in the reference frame list in the other reference direction is the same as the co-located frame of the current frame, the motion vector of the spatial neighboring block is used as the temporal motion vector. When the reference frame of the motion vector of the spatial neighboring block is different from the co-located frame of the current frame, the temporal motion vector is set to a 0 vector, and the scan can be stopped. According to the embodiments of the inveniton, the spatial neighboring block is fixed to the left block of the current block.

For the bidirectional prediction, the scanning order of the first reference frame list and the second reference frame list may be determined according to the following rules:

when the current frame uses a low delay coding mode and the co-located frame of the current frame is set as the first frame in the second reference frame list, the second reference frame list may be scanned first; otherwise, the first reference frame list may be scanned first.

The low delay encoding mode of the current frame can indicate that the playback sequence of the reference frames of the current frame in the video sequence is before the current frame. The co-located frame of the current frame set as the first frame in the second reference frame list may indicate that the quantization step size of the first slice of the first reference frame list of the current frame is smaller than the quantization step size of the first slice of the second reference frame list.

After the temporal motion vector is derived, the temporal motion vector can be used to find the corresponding block of the current blocks in the reference frame.

In S320, the motion information of the sub-blocks of the current block is acquired according to the corresponding block of the current block.

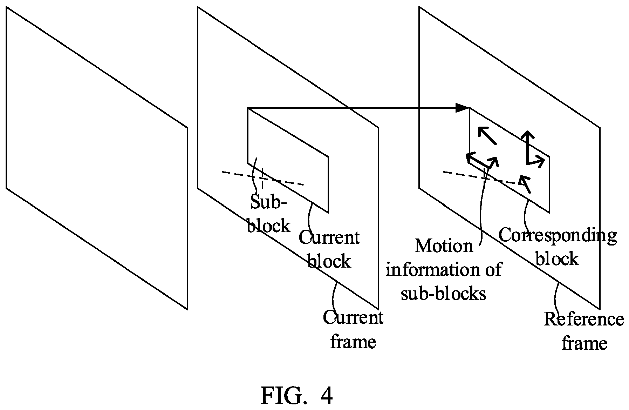

As shown in FIG. 4, the current block can be divided into the plurality of sub-blocks, and then the motion information of the plurality of sub-blocks in the corresponding block can be determined. It is worth noting that, for each sub-block of the plurality of sub-blocks, the motion information of the corresponding block can be determined by the smallest motion information storage unit in which it is located.

The motion information may include one or any combination of the following information: a motion vector; motion vector difference value; a reference frame index value; a reference direction of inter-frame prediction; information of an image block using intra-frame coding or inter-frame coding; or a division mode of an image block.

It can be seen from the implementation process of ATMVP described in FIG. 3 that for bidirectional prediction, the worst case is: in the process of deriving the temporal motion vector, both reference frame lists are scanned, and the temporal motion vector satisfying the conditions is still not derived. In this case, the scanning of the two reference frame lists is redundant.

Further, in the bidirectional prediction, when the encoding mode of the current frame is low delay B mode or a random access mode, the reference frames in the first reference frame list and the reference frames in the second reference frame list may have a certain overlap. Therefore, in the process of obtaining the temporal motion vector, there will be redundant operations in the scanning process of the two reference frame lists.

Therefore, the temporal motion vector derivation provided by the existing related technology for the bidirectional prediction is relatively complicated, and there is room for improvement.

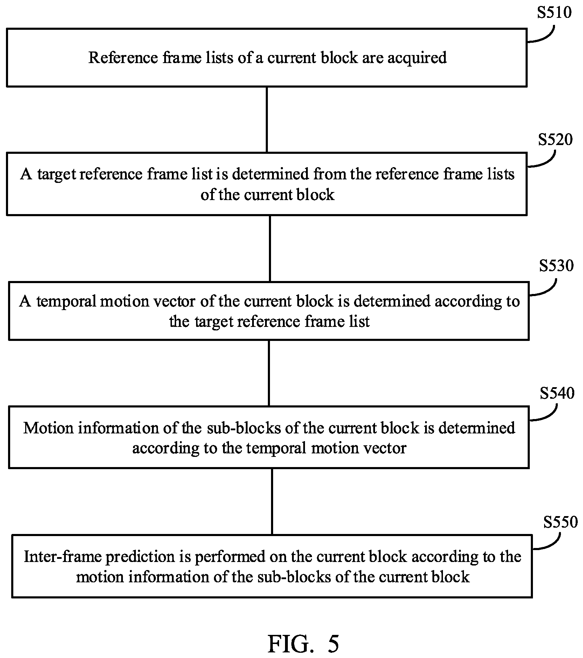

The various embodiments of the present disclosure will be described below with reference to FIG. 5.

FIG. 5 shows a video processing method provided by one embodiment of the present disclosure. The method in FIG. 5 may be applied to an encoding end or a decoding end.

In S501, reference frame lists of a current block are acquired. The reference frame lists of the current block include a first reference frame list and a second reference frame list.

The current block may be referred to as the current CU. The reference frame lists of the current block include the first reference frame list and the second reference frame list, indicating that the inter-frame bidirectional prediction needs to be executed for the current block.

Optionally, the first reference frame list may be a forward reference frame list, or a reference frame list including a first group of reference frames. The first group of reference frames may include reference frames whose time sequence is before and after the current frame.

Optionally, the second reference frame list may be a backward reference frame list, or a reference frame list that includes a second group of reference frames, and the second group of reference frames may include reference frames whose time sequence before and after the current frame.

It should be noted that, in some other embodiments, both the first reference frame list and the second reference frame list may include reference frames that are before and after the current frame in time sequence, and the bidirectional prediction may refer to that the reference frames with different reference directions are selected from the first reference frame list and the second reference frame list.

In S520, a target reference frame list is determined from the reference frame lists of the current block.

The target reference frame list may be one of the first reference frame list and the second reference frame list. The target reference frame list may be selected randomly or according to certain rules. For example, in one embodiment, the target reference frame may be selected according to the following rules: if the current frame where the current block is located uses the low delay coding mode and the co-located frame of the current frame is the first frame in the second reference frame list, the second reference frame list is determined as the target reference Frame list; and/or if the current frame where the current block is located does not use the low delay encoding mode or the co-located frame of the current frame is not the first frame in the second reference frame list, the first reference frame list is determined as the target reference frame list.

In S530, a temporal motion vector of the current block is determined according to the target reference frame list.

In the bidirectional prediction, an example embodiment of the present disclosure may determine the temporal motion vector of the current block according to one of the first reference frame list and the second reference frame list. That is, regardless of whether the temporal motion vector can be derived from the target reference frame list, the scan may stop after the target reference frame list is scanned. In other words, the temporal motion vector of the current block can be determined only according to the target reference frame list.

For example, a first candidate motion vector may be selected first from the current motion vector candidate list (the motion vector candidate list can be constructed based on the motion vectors of the image blocks at four adjacent positions in the spatial domain); and the reference frame of the first candidate motion vector may be found from the target reference frame list. Wen the reference frame of the first candidate motion vector is the same as the co-located frame of the current block, the first candidate motion vector can be determined as the temporal motion vector. When the reference frame of the first candidate motion vector is different from the co-located frame of the current block, the scan may be also stopped instead of continuing to scan another reference frame list of the current block as described in the method in FIG. 3. In this case, the 0 vector can be used as the temporal motion vector of the current block.

In S540, the motion information of the sub-blocks of the current block is determined according to the temporal motion vector.

For example, in one embodiment, the corresponding block of the current block in the reference frame can be determined according to the temporal motion vector. Then, the motion information of the sub-blocks of the current block can be determined according to the corresponding block of the current block in the reference frame. The motion information may include one or any combination of the following information: a motion vector; motion vector difference value; a reference frame index value; a reference direction of inter-frame prediction; information of an image block using intra-frame coding or inter-frame coding; or a division mode of an image block. S540 can be implemented with reference to S320 above, which will not be described in detail here.

In S550, the inter-frame prediction is performed on the current block according to the motion information of the sub-blocks of the current block.

In one embodiment, S550 may include: performing the inter-frame prediction according to the motion information of the sub-blocks of the current block by using the sub-blocks of the current block as units.

For example, in one embodiment, the motion information of the sub-blocks of the current block can be inserted as ATMVP into the affine merge candidates list of the current block as shown in FIG. 1, and then a complete affine merge candidate list can be constructed according to S120 to S160 in FIG. 1. Then, the candidate motion vector in the affine merge candidates list can be used to perform the inter-frame prediction on the current block to determine the optimal candidate motion vector. The detailed implementation of S550 can be performed with reference to related technologies, which is not limited in the embodiments of the present disclosure.

In the present disclosure, the operation of the encoding/decoding ends may be simplified by limiting the number of reference frame lists that need to be scanned in the bidirectional prediction process.

It can be understood that when the method in FIG. 5 is applied to the encoding end and the decoding end, the inter-frame prediction process for the current block described in process S550 will be different. For example, when the method in FIG. 5 is applied to the encoding end, performing inter-frame prediction on the current block may include: determining the predicted block of the current block; calculating the residual block of the current block according to the original block and the predicted block of the current block. As another example, when the method of FIG. 5 is applied to the decoding end, performing inter-frame prediction on the current block may include: determining the predicted block and residual block of the current block; calculating the reconstructed block of the current block according to the predicted block and residual block of the current block.

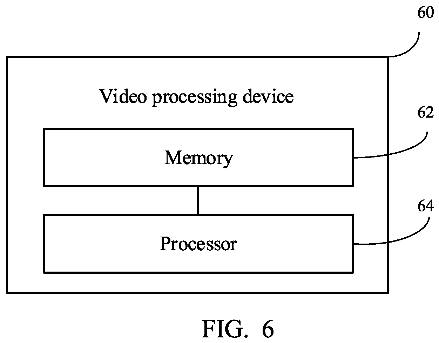

The example method embodiments of the present disclosure are described in detail above with reference to FIG. 1 to FIG. 5. The device embodiments of the present disclosure will be described in detail below with reference to FIG. 6. It should be understood that the description of the method embodiments and the description of the device embodiments correspond to each other, and therefore, for the parts that are not described in detail, reference can be made to the previous method embodiments.

FIG. 6 is a schematic structural diagram of a video processing device provided by embodiments of the present disclosure. As shown in FIG. 6, the video processing device 60 includes a memory 62 and a processor 64.

The memory 62 is configured to store codes.

The processor 64 is configured to execute the codes stored in the memory 62, to: obtain reference frame lists of a current block, where the reference frame lists of the current block include a first reference frame list and a second reference frame list; determine a target reference frame list according to the reference frame lists of the current block where the target reference frame list is one of the first reference frame list and the second reference frame list; determine a temporal motion vector of the current block according to the target reference frame list of the current block; determine motion information of sub-blocks of the current block according to the temporal motion vector; and perform inter-frame prediction according to the motion information of the sub-blocks of the current block.

Optionally, determining the motion information of the sub-blocks of the current block according to the temporal motion vector may include: determining a corresponding block of the current block in the reference frame according to the temporal motion vector; and determining the motion information of the sub-blocks of the current block according to the corresponding block of the current block in the reference frame.

Optionally, determining the target reference frame list according to the reference frame lists of the current block may include: when the current frame where the current block is located uses the low delay coding mode and the co-located frame of the current frame is the first frame in the second reference frame list, determining the second reference frame list as the target reference Frame list; and/or when the current frame where the current block is located does not use the low delay encoding mode or the co-located frame of the current frame is not the first frame in the second reference frame list, determining the first reference frame list as the target reference frame list.

Optionally, the first reference frame list may be a forward reference frame list, or a reference frame list including a first group of reference frames. The first group of reference frames may include reference frames whose time sequence is before and after the current frame.

Optionally, the second reference frame list may be a backward reference frame list, or a reference frame list that includes a second group of reference frames, and the second group of reference frames may include reference frames whose time sequence before and after the current frame.

It should be noted that, in some other embodiments, both the first reference frame list and the second reference frame list may include reference frames that are before and after the current frame in time sequence, and the bidirectional prediction may refer to that the reference frames with different reference directions are selected from the first reference frame list and the second reference frame list.

Optionally, determining the temporal motion vector of the current block according to the target reference frame list of the current block may include: selecting the first candidate motion vector from the current motion vector candidate list; finding the reference frame of the first candidate motion vector in the target reference frame list; and when the reference frame of the first candidate motion vector is the same as the co-located frame of the current block, determining the first candidate motion vector as the temporal motion vector.

Optionally, determining the temporal motion vector of the current block according to the target reference frame list of the current block may further include: when the reference frame of the first candidate motion vector is different from the co-located frame of the current block , determining the temporal motion vector to be a 0 vector.

Optionally, performing the inter-frame prediction on the current block may include: determining a predicted block of the current block; and calculating a residual block of the current block according to the original block and the predicted block of the current block.

Optionally, performing the inter-frame prediction on the current block may include: determining a predicted block and a residual block of the current block; and calculating the reconstructed block of the current block according to the predicted block and the residual block of the current block.

Optionally, performing the inter-frame prediction on the current block according to the motion information of the sub-block of the current block may include: taking the sub-block of the current block as units according to the motion information of the sub-block of the current block to perform the inter-frame prediction.

The above-mentioned embodiments may be implemented in whole or in part by software, hardware, firmware or any other combination. When implemented by software, the above embodiments can be implemented in the form of a computer program product in whole or in part. The computer program product may include one or more computer instructions. When the one or more computer program instructions are loaded and executed on the computer, the processes or functions described in the embodiments of the present disclosure are performed in whole or in part. The computer may be a general-purpose computer, a special-purpose computer, a computer network, or another programmable device. The computer program instructions may be stored in a computer-readable storage medium or transmitted from one computer-readable storage medium to another computer-readable storage medium. For example, the computer instructions may be transmitted from a website, a computer, a server, or a data center, to another website, computer, server or data center via wired (such as coaxial cable, optical fiber, digital subscriber line (DSL)) or wireless (such as infrared, wireless, microwave, etc.) manners. The computer-readable storage medium may be any available medium that can be accessed by a computer or a data storage device such as a server or data center integrated with one or more available media. The usable medium may be a magnetic medium (for example, a floppy disk, a hard disk, a magnetic tape), an optical medium (for example, a digital video disc (DVD)), or a semiconductor medium (for example, a solid state disk (SSD)), etc.

A person of ordinary skill in the art may realize that the units and algorithm steps of the examples described in combination with the embodiments disclosed herein can be implemented by electronic hardware or a combination of computer software and electronic hardware. Whether these functions are executed by hardware or software depends on the specific application and design constraint conditions of the technical solution.

In the various embodiments provided in the present disclosure, it should be understood that the disclosed system, device, and method may be implemented in other ways. For example, the device embodiments described above are only illustrative. For example, the division of the units is only a logical function division, and there may be other divisions in actual implementation. For example, multiple units or components can be combined or may be integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units. That is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit.

## Claims

1. A video processing method, comprising:
obtaining reference frame lists of a current block, wherein the reference frame lists of the current block include a first reference frame list and a second reference frame list indicating inter-frame bidirectional prediction for the current block, wherein each of the first reference frame list and the second reference frame list includes reference frames that are before and after the current frame in time sequence;
scanning the first reference frame list in a current reference direction of the current block;
when the reference frame of a motion vector of a spatial neighboring block in the current reference direction is the same as a co-located frame of a current frame, using the motion vector as the temporal motion vector, wherein the spatial neighboring block is the block to the left of the current block;
when the reference frame of the motion vector of the spatial neighboring block in the current reference direction is different from the co-located frame of the current frame, scanning the second reference frame list in another reference direction of the current block;
when the reference frame of the motion vector of the spatial neighboring block in the first reference frame list in the other reference direction is the same as the co-located frame of the current frame, using the motion vector of the spatial neighboring block as the temporal motion vector;
when the reference frame of the motion vector of the spatial neighboring block in the other reference direction is different from the co-located frame of the current frame, setting the temporal motion vector to a o vector, and stopping the scan;
determining motion information of sub-blocks of the current block according to the temporal motion vector;
performing inter-frame bidirectional prediction on the current block according to the motion information of the sub-blocks of the current block.

2. The method according to claim 1, wherein determining the motion information of the sub-blocks of the current block according to the temporal motion vector includes:
determining a corresponding block of the current block in the reference frame according to the temporal motion vector;
determining the motion information of the sub-blocks of the current block according to the corresponding block of the current block in the reference frame.

3. The method according to claim 1 or 2, wherein determining a target reference frame list between the reference frame lists of the current block includes:
when the current frame where the current block is located uses a low delay coding mode and a co-located frame of the current frame is a first frame in the second reference frame list, determining the second reference frame list as the target reference frame list; and/or
when the current frame where the current block is located does not use the low delay encoding mode or the co-located frame of the current frame is not the first frame in the second reference frame list, determining the first reference frame list as the target reference frame list;
wherein the target reference frame list is one of the first reference frame list and the second reference frame list.

4. The method according to any of claims 1 to 3, wherein determining the temporal motion vector of the current block according to the target reference frame list of the current block includes:
determining a motion vector of a spatial neighboring block of the current block at a specific position;
when a reference frame of the motion vector of the spatial neighboring block is the same as the co-located frame of the current block, determining the motion vector of the spatial neighboring block as the temporal motion vector.

5. The method according to claim 4, wherein:
the spatial neighboring block of the current block at the specific position is a block on a left side of the current block.

6. The method according to claim 4, wherein:
when the reference frame of the motion vector of the spatial neighboring block is different from the co-located frame of the current block, determining a o vector as the temporal motion vector.

7. The method according to any of claims 1 to 6, wherein performing the inter-frame bidirectional prediction on the current block includes: determining a predicted block of the current block; and calculating a residual block of the current block according to the current block and the predicted block of the current block.

8. The method according to any of claims 1 to 6, wherein performing the inter-frame bidirectional prediction on the current block includes: determining a predicted block and a residual block of the current block; and calculating a reconstructed block of the current block according to the predicted block and the residual block of the current block.

9. The method according to any of claims 1 to 8, wherein performing the inter-frame bidirectional prediction on the current block according to the motion information of the sub-block of the current block includes: taking the sub-blocks of the current block as units according to the motion information of the sub-block of the current block to perform the inter-frame bidirectional prediction.

10. A video processing device, comprising:
a memory configured to store codes; and
a processor, configured to execute the codes stored in the memory to:
obtain reference frame lists of a current block, wherein the reference frame lists of the current block include a first reference frame list and a second reference frame list indicating inter-frame bidirectional prediction for the current block, wherein each of the first reference frame list and the second reference frame list include reference frames that are before and after the current frame in time sequence;
scan a current motion vector candidate list first, and using the first candidate motion vector in the motion vector candidate list as an initial temporal motion vector;
scan the first reference frame list in a current reference direction of the current block;
when the reference frame of the motion vector of a spatial neighboring block in the current reference direction is the same as the co-located frame of the current frame, the motion vector is used as the temporal motion vector, wherein the spatial neighboring block is the block to the left of the current block;
when the reference frame of the motion vector of the spatial neighboring block in the current reference direction is different from the co-located frame of the current frame, scan the first reference frame list in another reference direction of the current block;
when the reference frame of the motion vector of the spatial neighboring block in the first reference frame list in the other reference direction is the same as the co-located frame of the current frame, the motion vector of the spatial neighboring block is used as the temporal motion vector;
when the reference frame of the motion vector of the spatial neighboring block in the other reference direction is different from the co-located frame of the current frame, the temporal motion vector is set to a o vector, and the scan is stopped;
determine motion information of sub-blocks of the current block according to the temporal motion vector;
perform inter-frame bidirectional prediction according to the motion information of the sub-blocks of the current block.

11. The device according to claim 10, wherein determining the motion information of the sub-blocks of the current block according to the temporal motion vector includes:
determining a corresponding block of the current block in the reference frame according to the temporal motion vector;
determining the motion information of the sub-blocks of the current block according to the corresponding block of the current block in the reference frame.

12. The device according to claim 10 or 11, wherein determining the target reference frame list between the reference frame lists of the current block includes:
when the current frame where the current block is located uses the low delay coding mode and the co-located frame of the current frame is the first frame in the second reference frame list, determining the second reference frame list as the target reference frame list; and/or
when the current frame where the current block is located does not use the low delay encoding mode or the co-located frame of the current frame is not the first frame in the second reference frame list, determining the first reference frame list as the target reference frame list.

13. The device according to any of claims 10 to 12, wherein determining the temporal motion vector of the current block according to the target reference frame list of the current block includes:
determining a motion vector of a spatial neighboring block of the current block at a specific position;
when a reference frame of the motion vector of the spatial neighboring block is the same as the co-located frame of the current block, determining the motion vector of the spatial neighboring block as the temporal motion vector.

14. The device according to claim 13, wherein:
the spatial neighboring block of the current block at the specific position is a block on a left side of the current block.

15. The device according to claim 13, wherein:
when the reference frame of the motion vector of the spatial neighboring block is different from the co-located frame of the current block, determining a o vector as the temporal motion vector.

## Patentansprüche

1. Ein Videoverarbeitungsverfahren, umfassend:
Erhalten von Referenzrahmenlisten eines aktuellen Blocks, wobei die Referenzrahmenlisten des aktuellen Blocks eine erste Referenzrahmenliste und eine zweite Referenzrahmenliste umfassen, die eine bidirektionale Inter-Rahmen-Prädiktion für den aktuellen Block angeben, wobei jede der ersten Referenzrahmenliste und der zweiten Referenzrahmenliste Referenzrahmen umfasst, die zeitlich vor und nach dem aktuellen Rahmen liegen;
Abtasten der ersten Referenzrahmenliste in einer aktuellen Referenzrichtung des aktuellen Blocks;
wenn der Referenzrahmen eines Bewegungsvektors eines räumlichen Nachbarblocks in der aktuellen Referenzrichtung der gleiche ist wie ein co-lokalisierter Rahmen eines aktuellen Rahmens, Verwenden des Bewegungsvektors als den zeitlichen Bewegungsvektor, wobei der räumliche Nachbarblock der Block links von dem aktuellen Block ist;
wenn der Referenzrahmen des Bewegungsvektors des räumlichen Nachbarblocks in der aktuellen Referenzrichtung von dem co-lokalisierten Rahmen des aktuellen Rahmens verschieden ist, Abtasten der zweiten Referenzrahmenliste in einer anderen Referenzrichtung des aktuellen Blocks;
wenn der Referenzrahmen des Bewegungsvektors des räumlichen Nachbarblocks in der ersten Referenzrahmenliste in der anderen Referenzrichtung der gleiche ist wie der co-lokalisierte Rahmen des aktuellen Rahmens, Verwenden des Bewegungsvektors des räumlichen Nachbarblocks als den zeitlichen Bewegungsvektor;
wenn der Referenzrahmen des Bewegungsvektors des räumlichen Nachbarblocks in der anderen Referenzrichtung von dem co-lokalisierten Rahmen des aktuellen Rahmens verschieden ist, Setzen des zeitlichen Bewegungsvektors auf einen o-Vektor und Stoppen des Abtastens;
Bestimmen von Bewegungsinformationen von Unterblöcken des aktuellen Blocks gemäß dem zeitlichen Bewegungsvektor;
Durchführen einer bidirektionalen Inter-Rahmen-Prädiktion an dem aktuellen Block gemäß den Bewegungsinformationen der Unterblöcke des aktuellen Blocks.

2. Das Verfahren nach Anspruch 1, wobei das Bestimmen der Bewegungsinformationen der Unterblöcke des aktuellen Blocks gemäß dem zeitlichen Bewegungsvektor Folgendes beinhaltet:
Bestimmen eines entsprechenden Blocks des aktuellen Blocks in dem Referenzrahmen gemäß dem zeitlichen Bewegungsvektor;
Bestimmen der Bewegungsinformationen der Unterblöcke des aktuellen Blocks gemäß dem entsprechenden Block des aktuellen Blocks in dem Referenzrahmen.

3. Das Verfahren nach Anspruch 1 oder 2, wobei das Bestimmen einer Zielreferenzrahmenliste zwischen den Referenzrahmenlisten des aktuellen Blocks Folgendes beinhaltet:
wenn der aktuelle Rahmen, in dem sich der aktuelle Block befindet, einen Codierungsmodus mit geringer Verzögerung verwendet und ein co-lokalisierter Rahmen des aktuellen Rahmens ein erster Rahmen in der zweiten Referenzrahmenliste ist, Bestimmen der zweiten Referenzrahmenliste als die Zielreferenzrahmenliste; und/oder
wenn der aktuelle Rahmen, in dem sich der aktuelle Block befindet, den Codierungsmodus mit geringer Verzögerung nicht verwendet oder der co-lokalisierte Rahmen des aktuellen Rahmens nicht der erste Rahmen in der zweiten Referenzrahmenliste ist, Bestimmen der ersten Referenzrahmenliste als die Zielreferenzrahmenliste;
wobei die Zielreferenzrahmenliste eine von der ersten Referenzrahmenliste und der zweiten Referenzrahmenliste ist.

4. Das Verfahren nach einem der Ansprüche 1 bis 3, wobei das Bestimmen des zeitlichen Bewegungsvektors des aktuellen Blocks gemäß der Zielreferenzrahmenliste des aktuellen Blocks Folgendes beinhaltet:
Bestimmen eines Bewegungsvektors eines räumlichen Nachbarblocks des aktuellen Blocks an einer spezifischen Position;
wenn ein Referenzrahmen des Bewegungsvektors des räumlichen Nachbarblocks der gleiche ist wie der co-lokalisierte Rahmen des aktuellen Blocks, Bestimmen des Bewegungsvektors des räumlichen Nachbarblocks als den zeitlichen Bewegungsvektor.

5. Das Verfahren nach Anspruch 4, wobei:
der räumliche Nachbarblock des aktuellen Blocks an der spezifischen Position ein Block auf einer linken Seite des aktuellen Blocks ist.

6. Das Verfahren nach Anspruch 4, wobei:
wenn der Referenzrahmen des Bewegungsvektors des räumlichen Nachbarblocks von dem co-lokalisierten Rahmen des aktuellen Blocks verschieden ist, Bestimmen eines o-Vektors als den zeitlichen Bewegungsvektor.

7. Das Verfahren nach einem der Ansprüche 1 bis 6, wobei das Durchführen der bidirektionalen Inter-Rahmen-Prädiktion an dem aktuellen Block Folgendes beinhaltet: Bestimmen eines vorhergesagten Blocks des aktuellen Blocks; und Berechnen eines Restblocks des aktuellen Blocks gemäß dem aktuellen Block und dem vorhergesagten Block des aktuellen Blocks.

8. Das Verfahren nach einem der Ansprüche 1 bis 6, wobei das Durchführen der bidirektionalen Inter-Rahmen-Prädiktion an dem aktuellen Block Folgendes beinhaltet: Bestimmen eines vorhergesagten Blocks und eines Restblocks des aktuellen Blocks; und Berechnen eines rekonstruierten Blocks des aktuellen Blocks gemäß dem vorhergesagten Block und dem Restblock des aktuellen Blocks.

9. Das Verfahren nach einem der Ansprüche 1 bis 8, wobei das Durchführen der bidirektionalen Inter-Rahmen-Prädiktion an dem aktuellen Block gemäß den Bewegungsinformationen des Unterblocks des aktuellen Blocks Folgendes beinhaltet: Nehmen der Unterblöcke des aktuellen Blocks als Einheiten gemäß den Bewegungsinformationen des Unterblocks des aktuellen Blocks, um die bidirektionale Inter-Rahmen-Prädiktion durchzuführen.

10. Eine Videoverarbeitungsvorrichtung, umfassend:
einen Speicher, der konfiguriert ist, um Codes zu speichern; und
einen Prozessor, der konfiguriert ist, um die in dem Speicher gespeicherten Codes auszuführen, um:
Referenzrahmenlisten eines aktuellen Blocks zu erhalten, wobei die Referenzrahmenlisten des aktuellen Blocks eine erste Referenzrahmenliste und eine zweite Referenzrahmenliste umfassen, die eine bidirektionale Inter-Rahmen-Prädiktion für den aktuellen Block angeben, wobei jede der ersten Referenzrahmenliste und der zweiten Referenzrahmenliste Referenzrahmen umfasst, die zeitlich vor und nach dem aktuellen Rahmen liegen;
zuerst eine aktuelle Bewegungsvektorkandidatenliste abzutasten und den ersten Kandidatenbewegungsvektor in der Bewegungsvektorkandidatenliste als einen anfänglichen zeitlichen Bewegungsvektor zu verwenden;
die erste Referenzrahmenliste in einer aktuellen Referenzrichtung des aktuellen Blocks abzutasten;
wenn der Referenzrahmen des Bewegungsvektors eines räumlichen Nachbarblocks in der aktuellen Referenzrichtung der gleiche ist wie der co-lokalisierte Rahmen des aktuellen Rahmens, der Bewegungsvektor als der zeitliche Bewegungsvektor verwendet wird, wobei der räumliche Nachbarblock der Block links von dem aktuellen Block ist;
wenn der Referenzrahmen des Bewegungsvektors des räumlichen Nachbarblocks in der aktuellen Referenzrichtung von dem co-lokalisierten Rahmen des aktuellen Rahmens verschieden ist, die erste Referenzrahmenliste in einer anderen Referenzrichtung des aktuellen Blocks abzutasten;
wenn der Referenzrahmen des Bewegungsvektors des räumlichen Nachbarblocks in der ersten Referenzrahmenliste in der anderen Referenzrichtung der gleiche ist wie der co-lokalisierte Rahmen des aktuellen Rahmens, der Bewegungsvektor des räumlichen Nachbarblocks als den zeitlichen Bewegungsvektor verwendet wird;
wenn der Referenzrahmen des Bewegungsvektors des räumlichen Nachbarblocks in der anderen Referenzrichtung von dem co-lokalisierten Rahmen des aktuellen Rahmens verschieden ist, der zeitliche Bewegungsvektor auf einen o-Vektor gesetzt wird und das Abtasten gestoppt wird;
Bewegungsinformationen von Unterblöcken des aktuellen Blocks gemäß dem zeitlichen Bewegungsvektor zu bestimmen;
eine bidirektionale Inter-Rahmen-Prädiktion gemäß den Bewegungsinformationen der Unterblöcke des aktuellen Blocks durchzuführen.

11. Die Vorrichtung nach Anspruch 10, wobei das Bestimmen der Bewegungsinformationen der Unterblöcke des aktuellen Blocks gemäß dem zeitlichen Bewegungsvektor Folgendes beinhaltet:
Bestimmen eines entsprechenden Blocks des aktuellen Blocks in dem Referenzrahmen gemäß dem zeitlichen Bewegungsvektor;
Bestimmen der Bewegungsinformationen der Unterblöcke des aktuellen Blocks gemäß dem entsprechenden Block des aktuellen Blocks in dem Referenzrahmen.

12. Die Vorrichtung nach Anspruch 10 oder 11, wobei das Bestimmen der Zielreferenzrahmenliste zwischen den Referenzrahmenlisten des aktuellen Blocks Folgendes beinhaltet:
wenn der aktuelle Rahmen, in dem sich der aktuelle Block befindet, den Codierungsmodus mit geringer Verzögerung verwendet und der co-lokalisierte Rahmen des aktuellen Rahmens der erste Rahmen in der zweiten Referenzrahmenliste ist, Bestimmen der zweiten Referenzrahmenliste als die Zielreferenzrahmenliste; und/oder
wenn der aktuelle Rahmen, in dem sich der aktuelle Block befindet, den Codierungsmodus mit geringer Verzögerung nicht verwendet oder der co-lokalisierte Rahmen des aktuellen Rahmens nicht der erste Rahmen in der zweiten Referenzrahmenliste ist, Bestimmen der ersten Referenzrahmenliste als die Zielreferenzrahmenliste.

13. Die Vorrichtung nach einem der Ansprüche 10 bis 12, wobei das Bestimmen des zeitlichen Bewegungsvektors des aktuellen Blocks gemäß der Zielreferenzrahmenliste des aktuellen Blocks Folgendes beinhaltet:
Bestimmen eines Bewegungsvektors eines räumlichen Nachbarblocks des aktuellen Blocks an einer spezifischen Position;
wenn ein Referenzrahmen des Bewegungsvektors des räumlichen Nachbarblocks der gleiche ist wie der co-lokalisierte Rahmen des aktuellen Blocks, Bestimmen des Bewegungsvektors des räumlichen Nachbarblocks als den zeitlichen Bewegungsvektor.

14. Die Vorrichtung nach Anspruch 13, wobei:
der räumliche Nachbarblock des aktuellen Blocks an der spezifischen Position ein Block auf einer linken Seite des aktuellen Blocks ist.

15. Die Vorrichtung nach Anspruch 13, wobei:
wenn der Referenzrahmen des Bewegungsvektors des räumlichen Nachbarblocks von dem co-lokalisierten Rahmen des aktuellen Blocks verschieden ist, Bestimmen eines o-Vektors als den zeitlichen Bewegungsvektor.

## Revendications

1. Procédé de traitement vidéo, comprenant :
obtenir des listes de trames de référence d'un bloc courant, dans lequel les listes de trames de référence du bloc courant comprennent une première liste de trames de référence et une seconde liste de trames de référence indiquant une prédiction bidirectionnelle inter-trame pour le bloc courant, dans lequel chacune de la première liste de trames de référence et de la seconde liste de trames de référence comprend des trames de référence qui sont avant et après la trame courante en séquence temporelle ;
balayer la première liste de trames de référence dans une direction de référence courante du bloc courant ;
lorsque la trame de référence d'un vecteur de mouvement d'un bloc voisin spatial dans la direction de référence courante est la même qu'une trame co-localisée d'une trame courante, utiliser le vecteur de mouvement comme étant le vecteur de mouvement temporel, dans lequel le bloc voisin spatial est le bloc à gauche du bloc courant ;
lorsque la trame de référence du vecteur de mouvement du bloc voisin spatial dans la direction de référence courante est différente de la trame co-localisée de la trame courante, balayer la seconde liste de trames de référence dans l'autre direction de référence du bloc courant ;
lorsque la trame de référence du vecteur de mouvement du bloc voisin spatial du bloc courant dans la première liste de trames de référence d'une l'direction de référence est la même que la trame co-localisée de la trame courante, utiliser le vecteur de mouvement du bloc voisin spatial comme étant le vecteur de mouvement temporel ;
lorsque la trame de référence du vecteur de mouvement du bloc voisin spatial dans l'autre direction de référence est différente de la trame co-localisée de la trame courante, définir le vecteur de mouvement temporel comme étant un vecteur nul, et arrêter le balayage ;
déterminer l'information de mouvement de sous-blocs du bloc courant en fonction du vecteur de mouvement temporel ;
effectuer une prédiction bidirectionnelle inter-trame effectuée au bloc courant en fonction de l'information de mouvement des sous-blocs du bloc courant.

2. Procédé selon la revendication 1, dans lequel la détermination de l'information de mouvement des sous-blocs du bloc courant en fonction du vecteur de mouvement temporel comprend :
déterminer un bloc correspondant du bloc courant dans la trame de référence en fonction du vecteur de mouvement temporel ;
déterminer l'information de mouvement des sous-blocs du bloc courant en fonction du bloc correspondant au bloc courant dans la trame de référence.

3. Procédé selon la revendication 1 ou 2, dans lequel la détermination d'une liste de trames de référence cible entre les listes de trames de référence du bloc courant comprend :
lorsque la trame courante dans laquelle est situé le bloc courant utilise un mode de codage à faible retard et qu'une trame co-localisée de la trame courante est une première trame de la seconde liste de trames de référence, déterminer la seconde liste de trames de référence comme étant la liste de trames de référence cible; et/ou
lorsque la trame courante dans laquelle est situé le bloc courant n'utilise pas le mode de codage à faible retard ou que la trame co-localisée de la trame courante n'est pas la première trame de la seconde liste de trames de référence, déterminer la première liste de trames de référence comme étant la liste de trames de référence cible ;
dans lequel la liste de trames de référence cible est l'une de la première liste de trames de référence et de la seconde liste de trames de référence.

4. Procédé selon l'une quelconque des revendications 1 à 3, dans lequel la détermination du vecteur de mouvement temporel du bloc courant en fonction de la liste de trames de référence cible du bloc courant comprend :
déterminer un vecteur de mouvement d'un bloc voisin spatial du bloc courant en une position spécifique;
lorsqu'une trame de référence du vecteur de mouvement du bloc voisin spatial est la même que la trame co-localisée du bloc courant, déterminer le vecteur de mouvement du bloc voisin spatial comme étant le vecteur de mouvement temporel.

5. Procédé selon la revendication 4, dans lequel :
le bloc voisin spatial du bloc courant à la position spécifique est un bloc du côté gauche du bloc courant.

6. Procédé selon la revendication 4, dans lequel :
lorsque la trame de référence du vecteur de mouvement du bloc voisin spatial est différente de la trame co-localisée du bloc courant, déterminer un vecteur nul comme étant le vecteur de mouvement temporel.

7. Procédé selon l'une quelconque des revendications 1 à 6, dans lequel effectuer la prédiction bidirectionnelle inter-trame sur le bloc courant comprend : déterminer un bloc prédit du bloc courant ; et calculer un bloc résiduel du bloc courant en fonction du bloc courant et du bloc prédit du bloc courant.

8. Procédé selon l'une quelconque des revendications 1 à 6, dans lequel effectuer la prédiction bidirectionnelle inter-trame sur le bloc courant comprend : déterminer un bloc prédit et un bloc résiduel du bloc courant ; et calculer un bloc reconstruit du bloc courant en fonction du bloc prédit et du bloc résiduel du bloc courant.

9. Procédé selon l'une quelconque des revendications 1 à 8, dans lequel effectuer la prédiction bidirectionnelle inter-trame sur le bloc courant en fonction de l'information de mouvement du sous-bloc du bloc courant comprend : prendre les sous-blocs du bloc courant comme unités en fonction de l'information de mouvement du sous-bloc du bloc courant pour effectuer la prédiction bidirectionnelle inter-trame.

10. Dispositif de traitement vidéo comprenant :
une mémoire configurée pour stocker des codes ; et
un processeur, configuré pour exécuter les codes stockés dans la mémoire afin de :
obtenir des listes de trames de référence d'un bloc courant, les listes de trames de référence du bloc courant comprenant une première liste de trames de référence et une seconde liste de trames de référence indiquant une prédiction bidirectionnelle inter-trame pour le bloc courant, chacune de ces listes comprenant des trames de référence situées avant et après la trame courante dans la séquence temporelle ;
balayer d'abord une liste courante de vecteurs de mouvement candidats, et utiliser le premier vecteur de mouvement candidat de la liste de vecteurs de mouvement candidats comme vecteur de mouvement temporel initial ;
balayer la première liste de trames de référence dans une direction de référence courante du bloc courant ;
lorsque la trame de référence du vecteur de mouvement d'un bloc voisin spatial dans la direction de référence courante est la même que la trame co-localisée de la trame courante, le vecteur de mouvement est utilisé comme étant le vecteur de mouvement temporel, ledit bloc voisin spatial est le bloc à gauche du bloc courant ;
lorsque la trame de référence du vecteur de mouvement du bloc voisin spatial dans la direction de référence courante est différente de la trame co-localisée de la trame courante, balayer la première liste de trames de référence dans l'autre direction de référence du bloc courant ;
lorsque la trame de référence du vecteur de mouvement du bloc voisin spatial du bloc courant dans la première liste de trames de référence de l' autre direction de référence est la même que la trame co-localisée de la trame courante, le vecteur de mouvement du bloc voisin spatial est utilisé comme étant le vecteur de mouvement temporel ;
lorsque la trame de référence du vecteur de mouvement du bloc voisin spatial dans l'autre direction de référence est différente de la trame co-localisée de la trame courante, le vecteur de mouvement temporel est défini comme un vecteur nul, et le balayage est interrompu ;
déterminer l'information de mouvement de sous-blocs du bloc courant en fonction du vecteur de mouvement temporel ;
effectuer une prédiction bidirectionnelle inter-trame en fonction de l'information de mouvement des sous-blocs du bloc courant.

11. Dispositif selon la revendication 10, dans lequel la détermination de l'information de mouvement des sous-blocs du bloc courant en fonction du vecteur de mouvement temporel comprend :
déterminer un bloc correspondant au bloc courant dans la trame de référence en fonction du vecteur de mouvement temporel ;
déterminer l'information de mouvement des sous-blocs du bloc courant en fonction du bloc correspondant au bloc courant dans la trame de référence.

12. Dispositif selon la revendication 10 ou 11, dans lequel la détermination de la liste de trames de référence cible entre les listes de trames de référence du bloc courant comprend :
lorsque la trame courante dans laquelle est situé le bloc courant utilise le mode de codage à faible retard et que la trame co-localisée de la trame courante est la première trame de la seconde liste de trames de référence, déterminer la seconde liste de trames de référence comme étant la liste de trames de référence cible ; et/ou
lorsque la trame courante dans laquelle est situé le bloc courant n'utilise pas le mode de codage à faible retard ou que la trame co-localisée de la trame courante n'est pas la première trame de la seconde liste de trames de référence, déterminer la première liste de trames de référence comme étant la liste de trames de référence cible.

13. Dispositif selon l'une quelconque des revendications 10 à 12, dans lequel la détermination du vecteur de mouvement temporel du bloc courant en fonction de la liste de trames de référence cible du bloc courant comprend :
déterminer un vecteur de mouvement d'un bloc voisin spatial du bloc courant à une position spécifique ;
lorsqu'une trame de référence du vecteur de mouvement du bloc voisin spatial est la même que la trame co-localisée du bloc courant, déterminer le vecteur de mouvement du bloc voisin spatial comme étant le vecteur de mouvement temporel.

14. Dispositif selon la revendication 13, dans lequel :
le bloc voisin spatial du bloc courant à la position spécifique est un bloc du côté gauche du bloc courant.

15. Dispositif selon la revendication 13, dans lequel :
lorsque la trame de référence du vecteur de mouvement du bloc voisin spatial est différente de la trame co-localisée du bloc courant, déterminer un vecteur nul comme étant le vecteur de mouvement temporel.
